# EUROPÄISCHE PATENTSCHRIFT

(11) **EP 0 400 421 B1**
(45) Veröffentlichungstag und Bekanntmachung des Hinweises auf die Patenterteilung: **12.01.1994**
(21) Anmeldenummer: 90109482.1
(22) Anmeldetag: 18.05.1990
(51) Int. Cl.: A01G 9/02, A01G 27/00

(54) **Behälter für Pflanzen**
Receptacle for plants
Récipient pour des plantes

(30) Priorität: 31.05.1989 CH 2042/89
(43) Veröffentlichungstag der Anmeldung: 05.12.1990
(73) Patentinhaber: ETERNIT AG, CH-8867 Niederurnen (CH)
(72) Erfinder: Blin, Liliane, CH-8723 Maseltrangen (CH)
(74) Vertreter: Scheidegger, Werner & Co.

(56) Entgegenhaltungen:
- EP-A- 0 214 329
- DE-U- 1 868 108
- DE-U- 7 935 440
- US-A- 4 276 720

## Beschreibung

Die vorliegende Erfindung betrifft einen Behälter für in Erdreich oder dergleichen einzusetzende Pflanzen, insbesondere Blumen und andere Zierpflanzen, mit am Behälterboden vorgesehenem Wasserspeicher und das Wasserniveau in letzterem begrenzenden Wasserablauföffnungen, sowie mit seitlichen Griffausbuchtungen im Behälterboden. Insbesondere betrifft die Erfindung Pflanzenbehälter der vorstehend genannten Art, welche als sogenannte Aussengefässe (Blumenkisten) Anwendung finden. Aussengefässe sind solche, bei welchen der Wasserspeicher nicht nur gezielt nachgefüllt wird, sondern dem Gefäss auch unkontrolliert Wasser durch Regenfälle zugeführt wird.

Bisherige Pflanzenbehälter mit einfachem Aufbau weisen zur Begrenzung des Wasserniveaus im Bodenspeicher gegenüber der ursprünglichen Bauart (mit Wasserabflussöffnungen im flachen Boden) solche Ueberlauföffnungen in den Seitenwänden auf, wobei diese in vorbestimmter Höhe über dem Boden vorgesehen werden. Bei einem eventuellen Ueberlaufen des Wasserspeichers entstehen infolge des mitgeschwemmten Erdreiches, Düngemitteln etc. unästhetische Spuren (Schlieren) an den äusseren Seitenwänden.

Bei anderen Pflanzenbehältern sind aufwendige, komplizierte und entsprechend störungsanfällige Wasserzuführungen (beinahe "Bewässerungsanlagen") vorgesehen. Solche Behälter sind nicht nur teuer, sie eignen sich zudem praktisch nicht für den Einsatz als Aussengefässe.

Ein Pflanzenbehälter der eingangs definierten Art ist in EP-A-214 329 gezeigt. Die Wasserablauföffnungen sind in sich aus dem Behälterboden nach oben erstreckenden angeformten Röhrchen vorgesehen. Die Herstellung solcher Behälter, insbesondere für den Fall von mehreren Ablauföffnungen, ist ausserordentlich aufwendig und wegen der Verstopfungsgefahr von Röhrchen wenig geeignet.

Aufgabe der vorliegenden Erfindung ist es, einen einfachen Pflanzenbehälter zu schaffen, welcher sich insbesondere als sogenanntes Aussengefäss eignet und die Nachteile der bisherigen Konstruktionen vermeidet.

Diese Aufgabe wird bei einem Behälter der eingangs definierten Art erfindungsgemäss durch die Merkmale gemäss Kennzeichen von Anspruch 1 gelöst.

Eine weitere Aufgabe der vorliegenden Erfindung liegt darin, den Pflanzenbehälter so auszugestalten, dass der Wasserspeicher optimal ausgenützt werden kann, ohne das Wachstum der eingesetzten Pflanzen zu beeinträchtigen.

Zur Lösung dieser Aufgabe sind zusätzlich zur besonderen Anordnung der Ablauföffnungen Mittel vorgesehen, um eine perforierte Trennplatte im Abstand oberhalb der erhöhten Bodenbereiche abzustützen.

Insbesondere kann die Trennplatte nicht nur zum Rückhalt des Erdreiches für die Pflanzen vorgesehen sein, sondern als Träger für eine mit wenigstens Teilen ihrer Seitenränder um die Ränder der Trennplatte nach unten in den Wasserspeicher ragende wassersaugende Matte ausgebildet sein.

Die Stützmittel für die Trennplatte können aus einem auf dem Behälterboden aufzulegenden Stützrahmen bestehen.

Bei einer bevorzugten Ausführungsform bestehen die Stützmittel für die Trennplatte aus einem wenigstens entlang von Abschnitten der Behälterwand in letzterer ausgebildeten vorstehenden Anschlägen.

Vorzugsweise sind in den Längsrändern der Trennplatte Aussparungen vorgesehen, durch welche Teile der wassersaugenden Matte nach unten bis zum Boden des Wasserspeichers geführt werden können.

Durch diese Konstruktion entsteht ein Luftraum zwischen der Wasseroberfläche und dem Erdreich (Trennplatte), dessen Luftschicht durch die Verbindung durch die Ablauföffnungen, die Trennplatte und das Erdreich zirkulieren kann. Durch die klare Trennung der Erd- und Wasserbereiche mittels des genannten Luftraumes bzw. die darin sich bildende Luftzirkulation wird einer Verschlammung und der Wurzelfäulnis entgegenwirkt.

Ein zum Gebrauch fertiger Behälter der vorstehend definierten Art zeichnet sich vorzugsweise dadurch aus, dass auf den Abstützmitteln zuunterst eine perforierte Trennplatte, darüber eine wassersaugende Matte, z.B. eine Filzmatte, und zuoberst gegebenenfalls eine wasserdurchlässige Wurzelschutzfolie angeordnet sind.

Die Behälter können aus einem beliebigen geeigneten Material bestehen. Besonders geeignet sind Behälter aus Faserzement.

Die Erfindung wird nachstehend anhand eines in der Zeichnung dargestellten Ausführungsbeispiels noch etwas näher erläutert. Es zeigt:
Fig. 1 einen Längsschnitt durch einen erfindungsgemäss ausgestalteten Pflanzenbehälter;
Fig. 2 einen Querschnitt durch die Ebene I-I eines Behälters nach Fig. 1, und
Fig. 3 eine schematische Ansicht auf einen Behälter (Ausschnitt) mit eingesetzter Trennplatte.

Aus der Zeichnung geht hervor, wie der Pflanzenbehälter (sogenanntes Blumenkistchen, insbesondere verwendbar als Aussengefäss, z.B. als Balkonkistchen) aufgebaut ist. Beim gezeigten Beispiel besteht der parallelepipedische Behälter 1 aus Faserzement (er könnte z.B. auch aus Kunststoff, Ton, Kunststein oder Metall bestehen) und weist neben den Längsseitenwänden 1',1'' und Querseitenwänden 2,3 einen Boden 4 sowie an den mittigen unteren Enden der Querseitenwände 2,3 je eine Griffausbuchtung A,A' auf. Die obere Begrenzungswand jeder Griffausbuchtung A,A' bildet einen gegenüber dem eigentlichen Behälterboden 4 jeweils erhöhten Bodenbereich 5 bzw. 6, in welchem Ablauföffnungen 5′ bzw. 6′ (Ueberlauföffnungen) vorgesehen sind.

Der ganze untere Bodenbereich 11 des Behälters bildet einen Wasserspeicher, sei dies nun zur Speicherung von Regenwasser oder von gezielt zugeführtem Wasser. Sobald das Wasserniveau des Speichers die Höhe der erhöhten Bodenbereiche 5,6 erreicht, fliesst das ggf. zuviel zugeführte Wasser durch die in diesen Bereichen vorgesehenen Oeffnungen 5′ ,6′ ab (entweder frei oder in einen als Auffangwanne ausgebildeten Behälteruntersatz) . Das Abfliessen des Wassers hinterlässt am Behälter keine sichtbaren Verschmutzungsspuren.

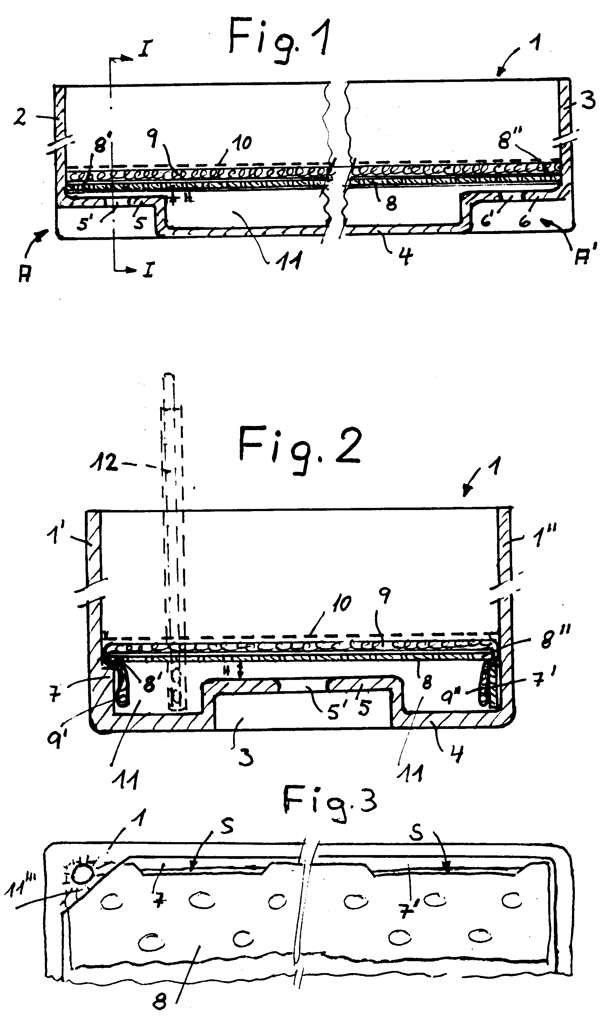

Am unteren inneren Ende der Längsseitenwände 1',1'' sind Anschläge entweder in Form von Wandverdickungen 7 (linke Seite von Fig. 2) oder eines rahmenförmigen Einsatzes 7′ vorgesehen.

Diese Anschläge oder Auflager 7 bzw. 7′ dienen der Abstützung einer gelochten Trennplatte 8, wobei die Auflager so angeordnet sind, dass die Trennplatte 8 in vorbestimmtem Abstand H oberhalb der erhöhten Bodenbereiche 5,6 zu liegen kommt.

Die Trennplatte 8 dient grundsätzlich der Abtrennung des Wasserspeicherraumes 11 vom oberen Teil des Behälters, in welchen das Erdreich (oder andere Pflanzensubstrate) einzubringen ist. Weiter dient die Trennplatte 8 als Träger für eine auf diese aufzulegende wassersaugende Matte 9 (z.B. eine Faser- oder Filzmatte), deren seitliche Randbereiche 9',9'' um die eingekerbten bzw. ausgesparten Seitenränder 8′,8'' der Trennplatte 8 nach unten umgebogen sind und nach unten bis zum Boden des Wasserspeichers 11 führen.

Diese Matte 9 saugt Wasser aus dem Wasserspeicher 11 nach oben und wird, vorzugsweise durch eine auf der Matte 9 ruhende Wasserdurchlässige Wurzelschutzfolie 10 hindurch, dieses Wasser nach Bedarf in das darüberliegende Erdreich (Wurzel bereich der eingesetzten Pflanzen) abgeben.

Mit einem derart aufgebauten Pflanzenbehälter ist gewährleistet, dass der Wurzelbereich der Pflanzen in optimaler Weise mit Wasser versorgt werden kann (vorausgesetzt der Speicher wird periodisch mit ausreichend Wasser versorgt). Auf jeden Fall fliesst eine eventuelle Wasser-Uebermenge selbsttätig ab.

Selbstverständlich kann der Behälter mit einem Wasserstandsanzeiger 12 und/oder Einfülltrichter (z.B. nach dem Schwimmerprinzip) ausgerüstet werden.

Fig. 3 der Zeichnung zeigt einen Ausschnitt eines Behälters 1 von oben, mit eingesetzter Trennplatte 8. Durch die Aussparungen S in den Längsrändern der Trennplatte 8 können Teile der wassersaugenden Matte 9 nach unten in den Wasserspeicher geführt werden (ohne durch die Abstützmittel 7 bzw. 7′ für die Trennplatte 8 gestört zu werden).

Fig. 3 zeigt auch, wie eine Führung bzw. Halterung 11''' für einen Wasserstandsanzeiger 12 als integrierender Bestandteil des Behälters 1 ausgebildet sein kann. Dieser Halter ''' kann eine trichterartige Oberseite aufweisen, welche das Nachfüllen von Wasser erleichtert.

## Patentansprüche

1. Behälter für in Erdreich oder dergleichen einzusetzende Pflanzen, insbesondere Blumen und andere Zierpflanzen, mit am Behälterboden (4) vorgesehenen Wasserspeicher (11) und das Wasserniveau in letzterem begrenzenden Wasserablauföffnungen (5',6'), sowie mit seitlichen Griffausbuchtungen (5,6) im Behälterboden (4), dadurch gekennzeichnet, dass die flächige Bereiche des Behälterbodens (4) bildenden Griffausbuchtungen (5,6) auf der Höhe des gewünschten maximalen Wasserniveaus angeordnet sind und dass die Wasserablauföffnungen (5',6') direkt in den die Griffausbuchtungen (5,6) bildenden, gegenüber dem übrigen Teil des Behälterbodens (4) erhöht angeordneten Bodenbereichen angebracht sind.

2. Behälter nach Anspruch 1, dadurch gekennzeichnet, dass in vorbestimmtem Abstand (H) oberhalb der die Ablauföffnungen (5',6') aufweisenden erhöhten Bodenbereiche (5,6) eine ggf. perforierte Trennplatte (8) vorgesehen ist.

3. Behälter nach Anspruch 1, dadurch gekennzeichnet, dass zusätzlich Mittel (7;7') vorgesehen sind, um eine ggf. perforierte Trennplatte (8) im Abstand (H) oberhalb der erhöhten Bodenbereiche (5,6) abzustützen.

4. Behälter nach Anspruch 2 oder 3, dadurch gekennzeichnet, dass eine Trennplatte (8) vorgesehen ist, welche als Träger für eine mit wenigstens Teilen ihrer Seitenränder (9',9'') um die Ränder (8',8'') der Trennplatte (8) nach unten in den Wasserspeicher (11) ragende wassersaugende Matte (9) ausgebildet ist.

5. Behälter nach Anspruch 4, dadurch gekennzeichnet, dass die Trennplatte (8) entlang ihrer Seitenränder Aussparungen (S) aufweist, durch welche Teile der wassersaugenden Matte (9) nach unten in den Wasserspei cher (11) geführt sind.

6. Behälter nach einem der Ansprüche 3-5, dadurch gekennzeichnet, dass die Stützmittel für die Trennplatte (8) aus einem wenigstens entlang von Abschnitten der Behälterwand (1',1'') in letzterer ausgebildeten vorstehenden Anschlägen (7) bestehen.

7. Behälter nach einem der Ansprüche 3-5, dadurch gekennzeichnet, dass die Stützmittel für die Trennplatte (8) aus einem auf dem Behälterboden (4) aufzulegenden Stützrahmen (7') bestehen.

8. Behälter nach einem der Ansprüche 3-7, dadurch gekennzeichnet, dass auf den Abstützmitteln (7;7') zuunterst eine perforierte Trennplatte (8), darüber eine wassersaugende Matte (9), z.B. eine Filzmatte, und zuoberst ggf. eine wasserdurchlässige Wurzelschutzfolie (10) angeordnet sind.

9. Behälter nach einem der Ansprüche 1-8, dadurch gekennzeichnet, dass er aus Zement, insbesondere Faserzement, besteht.

10. Behälter nach einem der Ansprüche 1-9, dadurch gekennzeichnet, dass er eine oben offene parallelepipedische, zylindrische oder kegelstumpfförmige Gestalt aufweist.

11. Behälter nach einem der Ansprüche 1-10, dadurch gekennzeichnet, dass seine Aussenwände mit einem ggf. reliefartigen Dekor versehen sind.

## Claims

1. Receptacle for plants, particularly flowers and other ornamental plants, to be embedded into earth material or similar, comprising a water reservoir (11) at its bottom (4) and water overflow openings (5',6') limiting the water level in said reservoir, and lateral gripping recesses (5,6) in the bottom (4) of the receptacle, characterized in that the gripping recesses (5,6) forming flat areas of the bottom (4) are provided at the height of the desired maximum water level and in that said water overflow openings (5',6') are provided directly in said areas of the bottom forming said gripping recesses (5,6) and being elevated with respect to the remaining portion of the bottom (4).

2. Receptacle according to claim 1, characterized in that a preferably perforated separation plate (8) is arranged at a predetermined distance (H) above said elevated bottom areas (5,6) presenting said overflow openings (5',6').

3. Receptacle according to claim 1, characterized by additional means (7;7') for supporting a preferably perforated separation plate (8) at a distance (H) above said elevated bottom areas (5,6).

4. Receptacle according to claim 2 or 3, characterized by a separation plate (8) forming a support for a water absorbing mat (9) projecting with at least parts of its side edges (9',9'') around the edges (8',8'') of the separation plate (8) downwards into the water reservoir (11).

5. Receptacle according to claim 4, characterized in that said separation plate (8) presents along its side edges openings (5) through which parts of said water absorbent mat (9) pass downwards into said water reservoir (11).

6. Receptacle according to any of claims 3-5, characterized in that said supporting means for the separation plate (8) are formed by stops (7) projecting from along at least sections of the receptacle wall (1',1'') and forming parts thereof.

7. Receptacle according to any of claims 3-5, characterized in that said supporting means for the separation plate (8) are formed by a supporting frame (7') to be positioned on the bottom (4) of the receptacle.

8. Receptacle according to any of claims 3-7, characterized in that on said supporting means (7;7') are arranged at the lowermost position a perforated separation plate (8), above the latter a water absorbent mat (9) e.g. a felt mat, and at the uppermost position a water permeable root protection foil.

9. Receptacle according to any of claims 1-8, characterized in that it is made of cement, particularly fiber cement.

10. Receptacle according to any of claims 1-9, characterized in that it has a parallelepipedic, cylindric or truncated cone shape with a top opening.

11. Receptacle according to any of claims 1-10, characterized in that outer wall surfaces are provided with decorative, preferably relief-type pattern.

## Revendications

1. Bac pour des plantes à mettre en terre ou dans un élément semblable, en particulier pour fleurs et autres plantes ornementales, comportant un réservoir d'eau (11) prévu dans le fond du bac (4) et des orifices d'écoulement d'eau (5', 6'), limitant dans ce réservoir le niveau d'eau, et comportant dans le fond du bac (4) des renflements latéraux de poignées (5, 6), caractérisé en ce que les renflements de poignées (5, 6) qui forment des zones planes du fond du bac (4) sont agencées à la hauteur du niveau d'eau maximum souhaité et en ce que les orifices d'écoulement d'eau (5', 6') sont appliqués directement dans les zones de fond qui forment les renflements de poignées (5, 6) et qui sont agencées de façon surélevée par rapport à la partie restante du fond de bac (4).

2. Bac suivant la revendication 1, caractérisé en ce qu'une plaque de séparation (8) éventuellement perforée est prévue à distance prédéterminée (H) au-dessus des zones de fond (5, 6) surélevées présentant les orifices'd'écoulement (5', 6').

3. Bac suivant la revendication 1, caractérisé en ce que sont prévus des moyens supplémentaires (7, 7') afin de soutenir une plaque de séparation (8) éventuellement perforée, à distance (H) au-dessus des zones de fond (5, 6) surélevées.

4. Bac suivant l'une ou l'autre des revendications 2 et 3, caractérisé en ce qu'est prévue une plaque de séparation (8) qui est réalisée sous la forme d'un support pour un tapis (9) qui aspire de l'eau et qui fait saillie vers le bas dans le réservoir d'eau (11), autour des bords (8', 8'') de la plaque de séparation (8), par au moins des parties de ses bords latéraux (9', 9'').

5. Bac suivant la revendication 4, caractérisé en ce que la plaque de séparation (8) présente le long de ses bords latéraux des évidements (S) à travers lesquels des parties du tapis (9) qui aspire l'eau sont dirigées vers le bas dans le réservoir d'eau (11).

6. Bac suivant l'une quelconque des revendications 3 à 5, caractérisé en ce que les moyens de soutien pour la plaque de séparation (8) sont constitués par des butées (7) qui font saillie et qui sont réalisées dans la paroi du bac (1', 1''), au moins le long de tronçons de cette paroi.

7. Bac suivant l'une quelconque des revendications 3 à 5, caractérisé en ce que les moyens de soutien de la plaque de séparation (8) sont constitués d'un châssis de soutien (7') à poser sur le fond du bac (4).

8. Bac suivant l'une quelconque des revendications 3 à 7, caractérisé en ce que sont agencés sur les moyens de soutien (7, 7'), au plus bas, une plaque de séparation (8) perforée, là-dessus un tapis (9) qui aspire de l'eau, par exemple un tapis de feutre, et au plus haut une feuille de protection des racines (10) perméable à l'eau.

9. Bac suivant l'une quelconque des revendications 1 à 8, caractérisé en ce qu'il est constitué de ciment, en particulier de fibrociment.

10. Bac suivant l'une quelconque des revendications 1 à 9, caractérisé en ce qu'il présente une forme parallélépipédique, cylindrique ou tronconique, ouverte vers le haut.

11. Bac suivant l'une quelconque des revendications 1 à 10, caractérisé en ce que ses parois externes sont pourvues d'une décoration éventuellement en genre de relief.
